# EUROPÄISCHE PATENTANMELDUNG

(11) **EP 3 667 632 A1**
(43) Veröffentlichungstag der Anmeldung: **17.06.2020**
(21) Anmeldenummer: 19208017.4
(22) Anmeldetag: 08.11.2019
(51) Int. Cl.: G08B 17/12, G08B 29/18

(54) **VERFAHREN ZUR IDENTIFIZIERUNG EINES RAUCHENS EINER PERSON**

(30) Priorität: 13.12.2018 DE 102018221661
(71) Anmelder: Robert Bosch GmbH, 70442 Stuttgart (DE)
(72) Erfinder: Poechmueller, Werner, 31079 Sibbesse (DE); Noserke, Thomas, 31137 Hildesheim (DE)

(57) **Zusammenfassung**

Vorgeschlagen wird ein Verfahren (50) zur Identifizierung eines Rauchens einer Person (21), insbesondere in einem Fahrzeug, mit den folgenden Schritten: Aufnehmen eines akustischen Signals mittels eines akustischen Sensors (22), Aufnehmen eines visuellen Signals mittels eines visuellen Sensors (24), Auswerten des akustischen Signals mittels einer ersten Auswerteeinheit (26) zur Feststellung eines Rauchens einer Person (21) mittels des akustischen Signals, Auswerten des visuellen Signals mittels einer zweiten Auswerteeinheit (28) zur Feststellung eines Rauchens einer Person (21) mittels des visuellen Signals, Identifizieren eines Rauchens einer Person (21), wenn mittels der ersten Auswerteeinheit (26) mittels des akustischen Signals ein Rauchen einer Person (21) festgestellt wird und wenn mittels der zweiten Auswerteeinheit (28) mittels des visuellen Signals ein Rauchen einer Person (21) festgestellt wird.

## Beschreibung

### Stand der Technik

Die Erfindung betrifft eine Verfahren zur Identifizierung eines Rauchens einer Person nach Gattung des unabhängigen Anspruchs. Weiterhin ist auch die Vorrichtung zur Identifizierung eines Rauchens einer Person Gegenstand der vorliegenden Erfindung.

Aus der US 2009/0027188 A1 ist ein System und eine Methode zur Verringerung einer potentiellen Gefahr eines Passagiers bekannt.

### Offenbarung der Erfindung

Vorgeschlagen wird ein Verfahren zur Identifizierung eines Rauchens einer Person, insbesondere in einem Fahrzeug, mit den folgenden Schritten:
Aufnehmen eines akustischen Signals mittels eines akustischen Sensors,

Aufnehmen eines visuellen Signals mittels eines visuellen Sensors,

Auswerten des akustischen Signals mittels einer ersten Auswerteeinheit zur Feststellung eines Rauchens einer Person mittels des akustischen Signals,

Auswerten des visuellen Signals mittels einer zweiten Auswerteeinheit zur Feststellung eines Rauchens einer Person mittels des visuellen Signals,

Identifizieren eines Rauchens einer Person, wenn mittels der ersten Auswerteeinheit mittels des akustischen Signals ein Rauchen einer Person festgestellt wird und wenn mittels der zweiten Auswerteeinheit mittels des visuellen Signals ein Rauchen einer Person festgestellt wird.

Der Vorteil liegt darin, dass mittels des vorgeschlagenen Verfahrens ein Rauchen bzw. eine Rauchaktivität einer Person, insbesondere in einem Fahrzeug sicher und/oder zuverlässig detektiert werden kann. Mittels der Verwendung einer akustischen und visuellen Sensorik kann die Detektion eines Rauchens insbesondere robust und/oder zuverlässig durchgeführt werden. Mit anderen Worten kann mittels der Sensordatenfusion von unterschiedlichen Sensoren, hier von einem visuellen Sensor und einem akustischen Sensor, eine hohe Robustheit und Detektionsverlässlichkeit gewährleistet werden. Hierzu werden insbesondere zwei Eingangssignale kontinuierlich ausgewertet und verglichen, zum einen ein Audiosignal zur Erkennung eines typischen Geräuschmusters, das beispielsweise bei der Benutzung eines Feuerzeuges oder von Streichhölzern entsteht und zum anderen ein Videosignal insbesondere zur Erkennung von rauchertypischen Bewegungen und/oder Zigarettenglut und/oder Rauch und/oder Feuerzeugfeuer und/oder Streichholzfeuer. Durch den Vergleich beider Signale kann eine höhere Detektionsgenauigkeit erreicht werden als bei bestehenden Lösungen, welche zum Beispiel die Basis für das Einleiten automatisierter Maßnahmen ist. Hierdurch kann insbesondere eine Fehlmeldung vermieden bzw. reduziert werden. Mit anderen Worten kann die Fehlerquote eines falschen Detektierens eines Rauchens einer Person insbesondere verringert werden. Beispielsweise kann in einem autonomen fahrenden Fahrzeug, welches sich insbesondere mehrere Personen teilen, und/oder einem autonom fahrenden Taxi und/oder einem Shared Vehicle und/oder einem Shared Automated Vehicle ein Rauchen zuverlässig detektiert werden. Beispielsweise kann hierdurch auf die Verwendung eines Rauchsensors verzichtet werden.

In einer Weiterentwicklung kann bei einem Identifizieren eines Rauchens einer Person ein visuelles und/oder akustisches Warnsignal ausgegeben werden. Hierdurch kann die Person insbesondere darauf aufmerksam gemacht werden und darauf hingewiesen werden, dass ein Rauchen, insbesondere in einem Fahrzeug, nicht erlaubt ist. Ferner kann einer Person mitgeteilt werden welches die Maßnahmen bzw. die Folgen eines Rauchens in einem Fahrzeug sind.

In einer vorteilhaften Ausführung kann bei einem Identifizieren eines Rauchens einer Person ein Hinweissignal an einen Server gesendet werden. Hierdurch kann insbesondere gewährleistet werden, dass eine zuverlässige Detektion eines Rauchens einer Person insbesondere an einem externen Server bearbeitet wird, wodurch beispielsweise das Rauchen mittels einer geeigneten Maßnahme geahndet werden kann. Beispielsweise kann in einem autonomen fahrenden Fahrzeug, welches sich insbesondere mehrere Personen teilen bzw. ein autonom fahrendes Taxi ein Rauchen insbesondere zuverlässig detektiert und insbesondere Folgemaßnahmen eingeleitet werden.

Vorzugsweise kann bei einem Identifizieren eines Rauchens einer Person eine Bewegungstrajektorie der Person und/oder Bilddarstellungen der Person in einem nichtflüchtigen Speicher abgespeichert werden. Hierdurch können insbesondere Beweise zu einem detektierten Rauchen bzw. eine detektierte Rauchaktivität einer Person gespeichert werden. Hierdurch kann eine zuverlässige Detektion eines Rauchens sicher und/oder einfach abgespeichert und/oder als Beweis verwendet werden.

In einer beispielhaften Ausgestaltung kann mittels des visuellen Sensors ein Wärmebild und/oder eine Bewegungstrajektorie einer Person aufgenommen werden. Hierdurch kann insbesondere mittels des visuellen Sensors einfach und/oder zuverlässig ein Rauchen einer Person basierend auf visuellen Daten erkannt bzw. das identifiziert bzw. detektiert werden. Beispielsweise kann mittels eines Videosignals insbesondere eine rauchertypische Bewegung und/oder mittels eines Wärmebildes eine Zigarettenglut und/oder Rauch und/oder Feuerzeugfeuer und/oder Streichholzfeuer sicher und/oder zuverlässig erkannt werden.

Weiterhin kann das visuelle Signal mittels einer Bildanalyse, insbesondere einer Segmentierung eines Wärmebildes nach Bereichen mit unterschiedlicher Temperatur mittels einer räumlichen Filterung, und einer Klassifikation der Merkmale, insbesondere mittels eines Nächste-Nachbar-Klassifikators oder eines Bayes'schen Klassifikators, ausgewertet werden. Hierdurch kann eine Detektion eines Rauchens einer Person mittels des visuellen Sensors bzw. mittels visueller Sensordaten sicher und/oder zuverlässig erkannt und analysiert werden.

In einer Weiterentwicklung kann mittels der zweiten Auswerteeinheit mittels des akustischen Signals ein Rauchen einer Person festgestellt werden, wenn das akustische Signal als ein Betätigen eines Feuerzeugs oder als ein Betätigen eines Streichholzes erkannt wird. Beim Anzünden eines Gegenstandes zum Rauchen, insbesondere eine Zigarette, betätigt eine Person besondere ein Feuerzeug oder ein Streichholz. Ein Feuerzeug oder Streichholz haben insbesondere typische Geräuschsignale, wobei diese Geräuschsignale insbesondere sicher mittels des akustischen Sensors identifiziert und mittels der Auswerteeinheit analysiert und identifiziert werden können. Hierdurch kann eine Detektion eines Rauchens einer Person mittels des akustischen Sensors bzw. mittels akustischen Sensordaten sicher und/oder zuverlässig erkannt und analysiert werden.

Vorzugsweise kann das akustische Signal mittels einer Merkmalsextraktion, insbesondere einer Fast Fourier Transformation, und einer Klassifikation der Merkmale ausgewertet werden. Hierdurch kann eine Detektion eines Rauchens einer Person mittels des akustischen Sensors bzw. mittels akustischen Sensordaten sicher und/oder zuverlässig erkannt und analysiert werden.

In einer Weiterentwicklung kann das akustische Signal mittels eines Recurrent Neural Network ausgewertet wird und/oder das visuelle Signal mittels eines Deep Neural Network ausgewertet wird. Hierdurch kann eine Detektion eines Rauchens einer Person mittels des visuellen Sensors bzw. mittels visueller Sensordaten sicher und/oder zuverlässig erkannt und analysiert werden. Weiterhin kann eine Detektion eines Rauchens einer Person mittels des akustischen Sensors bzw. mittels akustischen Sensordaten sicher und/oder zuverlässig erkannt und analysiert werden.

Weiterhin wird eine Vorrichtung zur Identifizierung eines Rauchens einer Person, insbesondere in einem Fahrzeug, vorgeschlagen, wobei auf der Vorrichtung ein Verfahren zur Identifizierung eines Rauchens einer Person ausführbar ist, wobei die Vorrichtung einen akustischen Sensor zum Aufnehmen eines akustischen Signals aufweist und wobei die Vorrichtung einen visuellen Sensor zum Aufnehmen eines visuellen Signals aufweist. Der Vorteil liegt darin, dass mittels des vorgeschlagenen Verfahrens ein Rauchen bzw. eine Rauchaktivität einer Person, insbesondere in einem Fahrzeug sicher und/oder zuverlässig detektiert werden kann. Mittels der Verwendung einer akustischen und visuellen Sensorik kann eine hohe Robustheit und Detektionsverlässlichkeit gewährleistet werden. Beispielsweise kann in einem autonomen fahrenden Fahrzeug, welches sich insbesondere mehrere Personen teilen und/oder einem autonom fahrenden Taxi und/oder einem Shared Vehicle und/oder einem Shared Automated Vehicle ein Rauchen zuverlässig detektiert werden.

Weiterhin kann die Vorrichtung eine erste Auswerteeinheit aufweisen zur Auswertung des akustischen Signals und zur Feststellung eines Rauchens einer Person mittels des akustischen Signals und wobei die Vorrichtung insbesondere eine zweite Auswerteeinheit aufweist zur Auswertung des visuellen Signals und zur Feststellung eines Rauchens einer Person mittels des visuellen Signals, wobei ein Rauchen einer Person identifiziert wird, wenn mittels der ersten Auswerteeinheit mittels des akustischen Signals ein Rauchen einer Person festgestellt wird und mittels der zweiten Auswerteeinheit mittels des visuellen Signals ein Rauchen einer Person festgestellt wird. Der Vorteil liegt darin, dass mittels des vorgeschlagenen Verfahrens ein Rauchen bzw. eine Rauchaktivität einer Person, insbesondere in einem Fahrzeug sicher und/oder zuverlässig analysiert und detektiert werden kann. Mittels der Verwendung einer akustischen und visuellen Sensorik und Auswerteeinheit zur Analyse der Sensordaten kann eine hohe Robustheit und Detektionsverlässlichkeit gewährleistet werden.

In einer Weiterentwicklung kann der visuelle Sensor als eine Kamera ausgebildet sein. In einer vorteilhaften weiteren Ausgestaltung kann die Kamera als eine Wärmebildkamera zum Aufnehmen eines Wärmebildes und/oder als eine Videokamera zum Aufnehmen einer Bewegungstrajektorie der Person ausgebildet sein. Hierdurch kann insbesondere eine zuverlässige und/oder einfache visuelle Aufnahme gewährleistet werden, wobei mittels der Kamera insbesondere einen Innenraum eines Fahrzeugs aufgenommen werden kann. Hierdurch kann insbesondere eine Bewegung und/oder ein Wärmebild eines Fahrers aufgenommen werden.

Vorzugsweise kann der akustische Sensor als zumindest ein Mikrofon ausgebildet sein. Hierdurch kann insbesondere eine zuverlässige und/oder einfache akustische Aufnahme mittels eines akustischen Sensors bzw. mittels zumindest einem Mikrofon gewährleistet werden. Mit anderen Worten kann eine sichere und zuverlässige Aufnahme von Geräuschen, insbesondere in einem Inneren eines Fahrzeugs, gewährleistet werden. Beispielsweise können mehr als ein Mikrofon verwendet werden, wodurch beispielsweise erkannt werden kann wo das Geräusch entstanden ist. Zum Beispiel kann so herausgefunden werden, wo sich eine Person in einem Fahrzeug befindet. Beispielsweise kann hierdurch der visuelle Sensor direkt in Richtung des entstandenen Geräuschs gerichtet werden.

Weiterhin wird ein Fahrzeug mit einer Vorrichtung zur Identifizierung eines Rauchens einer Person vorgeschlagen.

### Kurze Beschreibung der Zeichnungen

Ausführungsbeispiele der Erfindung sind in den Zeichnungen dargestellt und in den nachfolgenden Beschreibungen näher erläutert. Für die in den verschiedenen Figuren dargestellten und ähnlich wirkenden Elemente werden gleiche Bezugszeichen verwendet, wobei auf eine wiederholte Beschreibung der Elemente verzichtet wird. Es zeigen:
Fig. 1 eine schematische Darstellung einer Vorrichtung gemäß eines Ausführungsbeispiels der vorliegenden Erfindung;
Fig. 2 eine schematische Darstellung einer Vorrichtung gemäß eines Ausführungsbeispiels der vorliegenden Erfindung;
Fig. 3 ein Verfahren gemäß eines Ausführungsbeispiels der vorliegenden Erfindung;
Fig. 4 ein Verfahren gemäß eines Ausführungsbeispiels der vorliegenden Erfindung.

### Ausführungsformen der Erfindung:

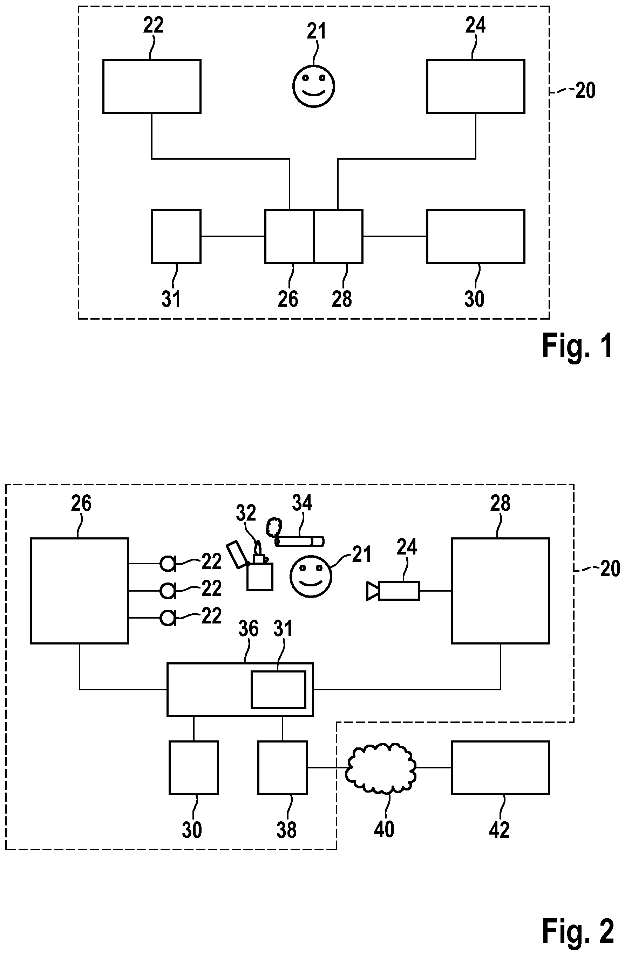

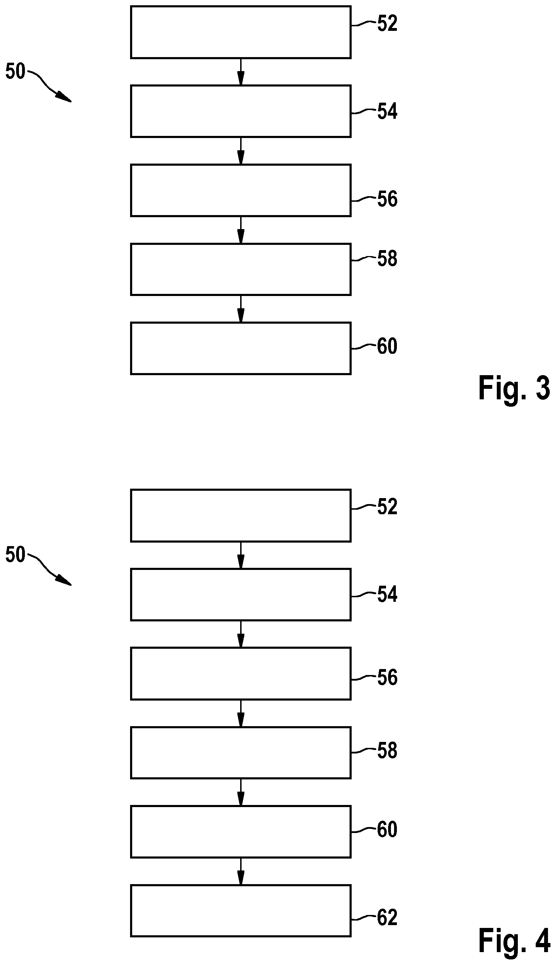

Fig. 1 zeigt eine schematische Darstellung einer Vorrichtung 20 zur Identifizierung eines Rauchens einer Person 21, insbesondere in einem Fahrzeug, gemäß eines Ausführungsbeispiels der vorliegenden Erfindung. Auf der Vorrichtung 20 kann ein Verfahren zur Identifizierung eines Rauchens einer Person 21 gemäß Fig. 3 und/oder gemäß Fig. 4 ausgeführt werden. Die Vorrichtung 20 kann insbesondere in einem Fahrzeug, beispielsweise in einem autonomen fahrenden Fahrzeug, welches sich beispielsweise mehrere Personen teilen und/oder einem autonom fahrenden Taxi und/oder einem Shared Vehicle und/oder einem Shared Automated Vehicle, angeordnet sein.

Die Vorrichtung 20 weist einen akustischen Sensor 22 zum Aufnehmen eines akustischen Signals und einen visuellen Sensor 24 zum Aufnehmen eines visuellen Signals auf. Ferner weist die Vorrichtung 20 zumindest eine Auswerteeinheit 26, 28 auf zur Analyse der Sensordaten des akustischen Sensors 22 und des visuellen Sensors 24. Hierfür kann die zumindest eine Auswerteeinheit 26, 28 insbesondere mit dem akustischen Sensor 22 und mit dem visuellen Sensor 24 verbunden sein. In dieser Ausführung weist die Vorrichtung 20 eine erste Auswerteeinheit 26 auf zur Auswertung des akustischen Signals und zur Feststellung eines Rauchens einer Person 21 mittels des akustischen Signals und weiterhin weist die Vorrichtung 20 eine zweite Auswerteeinheit 28 auf zur Auswertung des visuellen Signals und zur Feststellung eines Rauchens einer Person 21 mittels des visuellen Signals. Die erste Auswerteeinheit 26 ist mit dem akustischen Sensor 22 verbunden, wobei die zweite Auswerteeinheit 28 mit dem visuellen Sensor 24 verbunden ist. Die erste Auswerteeinheit 26 und die zweite Auswerteeinheit 28 können als separate Einheiten ausgebildet sein oder innerhalb eine Recheneinheit angeordnet sein. Mit anderen Worten kann die erste Auswerteeinheit 26 und die zweite Auswerteeinheit 28 können insbesondere als eine Recheneinheit ausgeführt sein bzw. in einer Recheneinheit angeordnet sein oder als zwei separate Recheneinheiten ausgeführt werden.

Der visuelle Sensor 24 kann als eine Kamera 24 ausgebildet sein. In einer Weiterentwicklung kann die Kamera 24 als eine Wärmebildkamera zum Aufnehmen eines Wärmebildes und/oder als eine Videokamera zum Aufnehmen einer Bewegungstrajektorie der Person 21 ausgebildet sein. Der akustische Sensor 22 kann als zumindest ein Mikrofon 22 ausgebildet sein bzw. kann der akustische Sensor 22 zumindest ein Mikrofon aufweisen. In einer Weiterentwicklung kann der akustische Sensor 22 mehr als ein Mikrofon 22 aufweisen, wobei die Mikrofone insbesondere bezüglich der Person 21 in unterschiedlichen Raumrichtungen angeordnet werden können. Hierdurch kann zum Beispiel eine Position der Person 21 bestimmt werden.

Ein Rauchen einer Person 21 wird dann identifiziert, wenn mittels der ersten Auswerteeinheit 26 mittels des akustischen Signals ein Rauchen der Person 21 festgestellt wird und mittels der zweiten Auswerteeinheit 28 mittels des visuellen Signals ein Rauchen der Person 21 festgestellt wird. Mit anderen Worten wird ein Rauchen der Person 21 dann identifiziert, wenn sowohl mittels des akustischen Signals als auch mittels des visuellen Signals ein Rauchen einer Person 21 festgestellt wird.

Die erste Auswerteeinheit 26 und/oder die zweite Auswerteeinheit 28 und/oder die Recheneinheit in welche die erste Auswerteeinheit 26 und die zweite Auswerteeinheit 28 angeordnet sind können insbesondere mit einer Ausgabeeinheit 30 verbunden sein. Mittels der Ausgabeeinheit 30 kann in einer ersten Ausführung bei einem Identifizieren eines Rauchens einer Person 21 ein visuelles und/oder akustisches Warnsignal ausgegeben werden. Beispielsweise kann ein Warnsymbol angezeigt werden oder ein Warnton ausgegeben werden. In einer Weiterentwicklung kann bei einem Identifizieren eines Rauchens einer Person 21 eine Bewegungstrajektorie der Person 21 und/oder Bilddarstellungen der Person, welche beispielsweise mittels des visuellen Sensors 24 aufgenommen sind, in einem nichtflüchtigen Speicher 31 abgespeichert werden. In einer Weiterentwicklung kann bei einem Identifizieren eines Rauchens einer Person 21 ein Hinweissignal an einen Server gesendet werden. Der Speicher 31 kann als separate Einheit ausgeführt sein oder in eine Auswerteeinheit oder eine Recheneinheit integriert sein.

Fig. 2 zeigt eine schematische Darstellung einer Vorrichtung 20 zur Identifizierung eines Rauchens einer Person 21, insbesondere in einem Fahrzeug gemäß eines Ausführungsbeispiels der vorliegenden Erfindung. Die Vorrichtung 20 gemäß Fig. 2 kann gemäß der Vorrichtung 20 gemäß Fig. 1 ausgebildet sein. Auf der Vorrichtung 20 kann ein Verfahren zur Identifizierung eines Rauchens einer Person 21 gemäß Fig. 3 und/oder gemäß Fig. 4 ausgeführt werden. Die Vorrichtung 20 kann beispielsweise in einem Fahrzeug, beispielsweise in einem autonomen fahrenden Fahrzeug, welches sich insbesondere mehrere Personen teilen und/oder einem autonom fahrenden Taxi und/oder einem Shared Vehicle und/oder einem Shared Automated Vehicle, angeordnet sein.

Fahrzeuge können insbesondere einen oder mehrere visuelle Sensoren 24, beispielsweise Kameras, aufweisen, welche einen Innenraum eines Fahrzeugs und/oder einen Fahrer und/oder einen Beifahrer beobachten. Über Bildverarbeitungsalgorithmen können beispielsweise eine Fahreraufmerksamkeit, eine Fahrererkennung, einen Stresszustand, eine Müdigkeit und weitere Zustände eines Fahrers bzw. Beifahrers erkannt werden. Solch eine visuelle Sensorik 24 bzw. eine Kamera kann beispielsweise zur Identifizierung eines Rauchens einer Person 21 verwendet werden. Weiterhin weisen Fahrzeuge vorzugsweise zumindest einen Audioeingangskanal insbesondere mit einem oder mehreren Mikrofonen auf, wobei ein Audioeingangskanal zum Beispiel für Sprachbediensysteme oder Freisprechtelefonie genutzt werden kann. Solch ein Audioeingangskanal kann beispielsweise als akustischer Sensor 22 verwendet werden. Mittels des akustischen Sensors 22 kann insbesondere ein akustisches Signal aufgenommen werden. Ein Rauchen einer Person 21 kann erkannt werden, wenn das akustische Signal als ein Betätigen eines Feuerzeugs 32 oder als ein Betätigen eines Streichholzes beispielweise zum Anzünden einer Zigarette 34 erkannt wird. Mittels des visuellen Sensors 24 können beispielsweise rauchertypische Bewegungen und/oder ein Wärmebild einer Zigarettenglut und/oder von Rauch und/oder einem Feuerzeugfeuer und/oder Streichholzfeuer erkannt werden. Gemäß Fig. 2 wird ein intelligentes Raucherkennungs- und Meldesystem schematisch dargestellt. Das System kann beispielsweise vorhandene Sensorik, wie Mikrofone bzw. Mikrofon-Arrays 22 und/oder eine Beobachtungskamera 24, beispielsweise eine Fahrerbeobachtungskamera 24 verwenden.

In dieser verteilten Ausführung weist der akustische Sensor 22 drei Mikrofone auf. Die akustischen Signale, welche mittels des akustischen Sensors 22 aufgenommen werden, können insbesondere mittels der ersten Auswerteeinheit 26, beispielsweise einem Audio Analysing Computer, analysiert werden. Hierbei kann der akustische Sensor 22 kontinuierlich Geräusche aufnehmen. Die Analyse kann beispielsweise über ein Deep Neural Network oder ein Recurrent Neural Network ausgeführt werden, das auf die Erkennung von Geräuschen trainiert wurde, wobei Geräusche beispielsweise als eine Benutzung des Feuerzeugs 32 oder von Streichhölzern identifiziert bzw. erkannt werden können. Erkennt die erste Auswerteeinheit 26 ein solches Geräusch, welches als ein Rauchen einer Person 21 identifiziert werden kann, leitet die erste Auswerteeinheit 26 die Analyse, insbesondere mit einem Zeitstempel, an eine dritte Recheneinheit 36 weiter. Die dritte Recheneinheit 36 kann insbesondere als ein Sensor Fusion Computer 36 ausgebildet sein, wobei die dritte Recheneinheit 36 insbesondere die Signale der unterschiedlichen Sensorik zusammenführt. Der Speicher 31 kann als separate Einheit ausgeführt sein oder in eine Auswerteeinheit oder eine Recheneinheit, zum Beispiel in der eine dritte Recheneinheit 36, integriert sein.

Die visuellen Signale, welche mittels des visuellen Sensors 24 aufgenommen werden, können insbesondere an eine zweite Auswerteeinheit 28 geleitet werden. Die zweite Auswerteeinheit 28 kann beispielsweise als ein Video Analysing Computer 26 ausgebildet sein, welcher die aufgezeichneten Bildinformationen auswertet. Hierfür kann beispielsweise ein speziell trainiertes Deep Neural Network verwendet werden, welches spezielle Muster, beispielsweise eine typische Bewegung eines Rauchens bzw. einer Raucheraktivität einer Person, in den Bildinformationen analysiert und insbesondere erkennt. Eine Zigarettenglut einer Zigarette 34 oder eine Flamme des Feuerzeugs 32 oder eines Streichholzes kann beispielsweise in dem Bereich von Infrarotlicht, beispielsweise mittels eines Punktes, erkannt werden. Eine Zigarettenglut einer Zigarette 34 kann beispielsweise daher erkannt werden, dass sich ein mittels eines Wärmebildes analysierter Punkt einer Zigarettenglut insbesondere zu einem Gesicht einer Person bewegt und bei einem Ziehen an der Zigarette durch die Person insbesondere eine erhöhte Identität der Zigarettenglut mittels des Wärmebildes erkannt werden kann. Erkennt die zweite Auswerteeinheit 28 mittels der visuellen Signale ein Rauchen einer Person, leitet die zweite Auswerteeinheit 28 die Analyse insbesondere mit einem Zeitstempel an die dritte Recheneinheit 36 weiter.

Die dritte Recheneinheit 36 vergleicht die jeweiligen Signale der ersten Auswerteeinheit 26 und der zweiten Auswerteeinheit 28 und kann somit zuverlässig eine Rauchaktivität kennen, wenn insbesondere mittels beider Sensoren und Auswerteeinheit ein Rauchen einer Person erkannt wird. Anschließend kann die dritte Recheneinheit 36 beispielsweise eine audiovisuelle Meldung über die Ausgabeeinheit 30, welche beispielsweise als Output Device ausgebildet ist, generieren, wobei hierdurch die Person 21 darüber informiert werden kann, dass ein Rauchen verboten ist.

In einer Weiterentwicklung kann das Ereignis der Identifikation eines Rauchens über einen Gateway 38, beispielsweise eine Connectivity Control Unit, die einen Internetzugang 40, beispielsweise in eine Cloud, bereitstellt, an ein Operation Center 42, beispielsweise eines Flottenbetreibers, weitergeleitet und gespeichert werden. Der Flottenbetreiber kann beispielsweise anhand dieser Informationen gewisse Maßnahmen ergreifen, zum Beispiel erhöhte Reinigungskosten in Rechnung stellen.

In einer Weiterentwicklung kann die erste Auswerteeinheit 26 und/oder die zweite Auswerteeinheit 28 und/oder die dritte Recheneinheit 36 auf einer einzigen Recheneinheit angeordnet und/oder realisiert werden. In einer Weiterentwicklung kann die Ausgabeeinheit 30 und/oder das Gateway 38 ebenfalls in der einzigen Recheneinheit angeordnet werden.

Fig. 3 zeigt ein Verfahren 50 zur Identifizierung eines Rauchens einer Person, insbesondere zur Identifizierung eines Rauchens einer Person in einem Fahrzeug, gemäß eines Ausführungsbeispiels der vorliegenden Erfindung. Das Verfahren 50 gemäß Fig. 3 kann insbesondere auf einer Vorrichtung gemäß Fig. 1 und/oder gemäß Fig. 2 ausgeführt werden. Das Verfahren 50 weist insbesondere die folgenden Schritte auf.

In einem ersten Schritt 52 wird ein akustisches Signal mittels des akustischen Sensors aufgenommen.

In einem zweiten Schritt 54 wird ein visuelles Signal mittels des visuellen Sensors aufgenommen. Beispielsweise kann mittels des visuellen Sensors ein Wärmebild und/oder eine Bewegungstrajektorie einer Person aufgenommen werden. Der erste Schritt 52 und der zweite Schritt 54 können insbesondere gleichzeitig ausgeführt werden.

In einem dritten Schritt 56 wird das akustische Signal mittels der ersten Auswerteeinheit zur Feststellung eines Rauchens einer Person mittels des akustischen Signals ausgewertet. Beispielsweise kann mittels der zweiten Auswerteeinheit mittels des akustischen Signals ein Rauchen einer Person festgestellt werden, wenn das akustische Signal als ein Betätigen eines Feuerzeugs oder als ein Betätigen eines Streichholzes erkannt wird. Weiterhin kann das akustische Signal insbesondere mittels einer Merkmalsextraktion, insbesondere einer Fast Fourier Transformation, und einer Klassifikation der Merkmale ausgewertet werden. In einer Weiterentwicklung kann das akustische Signal mittels eines Recurrent Neural Network ausgewertet werden. Mit anderen Worten kann die erste Auswerteeinheit bzw. der Audio Analysing Computer Verfahren der Signalauswertung anwenden, um die Audiosignale auszuwerten. Dies kann zum Beispiel in Form einer Datenvorverarbeitung, insbesondere eine Merkmalsextraktion, gefolgt von einem Klassifikator erfolgen. Eine für das Audio-Signal geeignete Merkmalsextraktion könnte beispielsweise als eine Frequenzanalyse in Form einer Fast Fourier Transformation ausgebildet sein.

In einem vierten Schritt 58 wird das visuelle Signal mittels der zweiten Auswerteeinheit zur Feststellung eines Rauchens einer Person mittels des visuellen Signals ausgewertet. Beispielsweise kann das visuelle Signal mittels einer Bildanalyse, insbesondere einer Segmentierung eines Wärmebildes nach Bereichen mit unterschiedlicher Temperatur mittels einer räumlichen Filterung, und einer Klassifikation der Merkmale, beispielsweise mittels eines Nächste-Nachbar-Klassifikators oder eines Bayes'schen Klassifikators, ausgewertet werden. In einer Weiterentwicklung kann das visuelle Signal mittels eines Deep Neural Network ausgewertet werden. Mit anderen Worten kann die zweite Auswerteeinheit bzw. der Video Analysing Computer Verfahren der Signalauswertung anwenden, um Videosignale auszuwerten. Dies kann zum Beispiel in Form einer Datenvorverarbeitung, beispielsweise ausgebildet als eine Merkmalsextraktion, gefolgt von einem Klassifikator erfolgen. Bei einem Videosignal kann eine Bildanalyse in Form einer Segmentierung des Infrarotsignals nach besonders heißen Stellen, beispielsweise einer Glut einer Zigarette, mittels einer räumlichen Filterung durchgeführt werden. Ein anschließend an die Merkmalsextraktion angewendete Klassifikator könnte beispielsweise als ein Nächste-Nachbar-Klassifikator oder ein Bayes'scher Klassifikator ausgebildet sein. Der dritte Schritt 56 und der vierte Schritt 58 können insbesondere gleichzeitig ausgeführt werden.

In einem fünften Schritt 60 wird ein Rauchen einer Person identifiziert, wenn mittels der ersten Auswerteeinheit mittels des akustischen Signals ein Rauchen einer Person festgestellt wird und wenn mittels der zweiten Auswerteeinheit mittels des visuellen Signals ein Rauchen einer Person festgestellt wird.

Fig. 4 zeigt ein Verfahren 50 zur Identifizierung eines Rauchens einer Person, insbesondere zur Identifizierung eines Rauchens einer Person in einem Fahrzeug, gemäß eines Ausführungsbeispiels der vorliegenden Erfindung. Das Verfahren 50 gemäß Fig. 4 kann insbesondere auf einer Vorrichtung gemäß Fig. 1 und/oder gemäß Fig. 2 ausgeführt werden. Das Verfahren 50 gemäß Fig. 4 weist insbesondere die Schritte des Verfahrens 50 gemäß Fig. 3 auf. Das Verfahren 50 gemäß Fig. 4 weist insbesondere den ersten Schritt 52, den zweiten Schritt 54, der dritten Schritt 56, den vierten Schritt 58 und der fünften Schritt 60 gemäß dem Verfahren 50 gemäß Fig. 3 auf.

Weiterhin weist das Verfahren 50 gemäß Fig. 4 einen weiteren sechsten Schritt 62 auf. In dem sechsten Schritt 62 kann bei einem Identifizieren eines Rauchens einer Person ein visuelles und/oder akustisches Warnsignal ausgegeben werden. Beispielsweise kann auf einer Anzeigevorrichtung ein Warnsymbol oder ein Warntext, beispielsweise der Text bitte nicht rauchen, ausgegeben werden. Ein akustisches Signal kann beispielsweise mittels eines Lautsprechers, beispielsweise eine Aussage bitte nicht rauchen, ausgegeben werden. Dies kann über das Abspielen einer gespeicherten Audiosignal-Datei, zum Beispiel eines MP3-Files ausgeführt werden. In einer anderen technischen Ausgestaltung kann eine akustische Ausgabe über eine Text-to-Speech-Vorrichtung eine Sprachausgabe erfolgen.

Alternativ oder zusätzlich kann bei einem Identifizieren eines Rauchens einer Person ein Hinweissignal an einen Server gesendet werden. Beispielsweise kann bei einem Identifizieren eines Rauchens einer Person ein Signal über ein Gateway an ein Operation Center gesendet werden. Zum Beispiel kann über einen drahtlosen Funkkanal eine Botschaft unter Nutzung des Internet-Protokolls, auch als IP bezeichnet, über die Cloud 40 transportiert bzw. weitergeleitet werden. In einer weiteren vorteilhaften Ausgestaltung kann ein Operator des Operation Centers über einen drahtlosen Funkkanal Kontakt mit der weiteren Recheneinheit bzw. mit dem Sensor Fusion Computer aufnehmen, um ein abgespeichertes Video-Signal und/oder Audio-Signal auszulesen. Hierdurch kann sich ein Operator insbesondere einen Eindruck bzw. ein Bild über den vermeintlichen Missbrauch des Fahrzeugs, zum Beispiel das Rauchen einer Person, verschaffen.

Alternativ oder zusätzlich kann bei einem Identifizieren eines Rauchens einer Person eine Bewegungstrajektorie der Person und/oder Bilddarstellungen der Person in einem nichtflüchtigen Speicher abgespeichert werden. Vorzugsweise können insbesondere die akustischen Signale und die visuellen Signale in einem nichtflüchtigen Speicher gespeichert werden. Zur Aufnahme einer Bewegungstrajektorie der Person kann beispielsweise ein Videosensor genutzt werden, der Einzelbilder oder eine Bildsequenz aufnimmt, wobei diese insbesondere in einem Speicher abgespeichert werden können.

Da die Detektion des Rauchereignisses vorzugsweise eine gewisse Zeit benötigen kann, kann in einer beispielhaften Ausführung das visuelle Signal bzw. das Videosignal in einem flüchtigen Zwischenspeicher, zum Beispiel in einem RAM-Ringspeicher, für einige Sekunden zwischengespeichert werden. Wenn die weitere Recheneinheit bzw. der Sensor Fusion Computer ein Rauchen einer Person identifiziert hat, kann der Inhalt des flüchtigen Speichers bzw. der der RAM-Ringspeicherinhalt dann in einen dauerhaften, nichtflüchtigen Flash-Speicher, zum Beispiel einem eMMC, gespeichert werden. Neben dem Videosignal könnte zusätzlich oder alternativ das akustische Signal des akustischen Sensors bzw. das Audio-Signal des Mikrofon-Arrays in gleicher Art abgespeichert werden. Über eine weitere Ausleseeinheit wäre es dann nachträglich möglich, einen Beweis für ein nicht erlaubtes Rauchereignis zu führen, um beispielsweise den Nutzer des Fahrzeugs und somit die Person die geraucht hat, zu überführen.

In einer weiteren vorteilhaften Ausgestaltung kann durch ein sogenanntes Mikrofon-Array, aufweisend insbesondere ein oder mehrere Mikrofone insbesondere mittels einer Anwendung von Verfahren der digitalen Signalauswertung insbesondere eine Richtung des Geräuschs bestimmt werden, beispielsweise das Geräusch beim Entzünden einer Flamme, zum Beispiel beim Anzünden eines Streichholzes oder eines Feuerzeugs. In einer weiteren vorteilhaften Ausführung kann mittels des visuellen Sensors und der zweiten Auswerteeinheit insbesondere eine Richtung der Glut und/oder Flamme erkannt werden. Die Richtungsinformation kann beispielsweise als eine eindimensionale, horizontale oder vertikale Richtung und/oder als eine zweidimensionale Richtungsinformation ausgebildet sein. Mittels des akustischen Sensors und/oder mittels des visuellen Sensors kann hierdurch eine Position eines Rauchers bzw. eines Rauchens in einem globalen Koordinatenraummodell beispielsweise in den Auswerteeinheiten bzw. in einer weiteren Recheneinheit erkannt bzw. analysiert werden. Weiterhin können das akustische Signal und/oder das visuelle Signal insbesondere mit einem Zeitstempel aus einer globalen Zeitquelle, beispielsweise aus einer Recheneinheit in einem Fahrzeug, versehen werden, wodurch einem erkannten Rauchen einer Person insbesondere eine räumliche und/oder eine zeitliche Zuordnung der identifizierten Signale des visuellen Sensors und/oder des akustischen Sensors zugeordnet werden. Sind die erkannten Signale, das Zündgeräusch, beispielsweise des Streichholzes oder des Feuerzeugs, und das Videosignal, zum Beispiel die Glut und/oder das Feuer, zeitlich und räumlich synchron, so kann ein Rauchen einer Person identifiziert werden, wodurch insbesondere eine Funktion ausgelöst werden kann.

## Patentansprüche

1. Verfahren (50) zur Identifizierung eines Rauchens einer Person (21), insbesondere in einem Fahrzeug, mit den folgenden Schritten:
Aufnehmen eines akustischen Signals mittels eines akustischen Sensors (22),
Aufnehmen eines visuellen Signals mittels eines visuellen Sensors (24),
Auswerten des akustischen Signals mittels einer ersten Auswerteeinheit (26) zur Feststellung eines Rauchens einer Person (21) mittels des akustischen Signals,
Auswerten des visuellen Signals mittels einer zweiten Auswerteeinheit (28) zur Feststellung eines Rauchens einer Person (21) mittels des visuellen Signals,
Identifizieren eines Rauchens einer Person (21), wenn mittels der ersten Auswerteeinheit (26) mittels des akustischen Signals ein Rauchen einer Person (21) festgestellt wird und wenn mittels der zweiten Auswerteeinheit (28) mittels des visuellen Signals ein Rauchen einer Person (21) festgestellt wird.

2. Verfahren (50) nach Anspruch 1, wobei bei einem Identifizieren eines Rauchens einer Person (21) ein visuelles und/oder akustisches Warnsignal ausgegeben wird.

3. Verfahren (50) nach einem der vorherigen Ansprüche, wobei bei einem Identifizieren eines Rauchens einer Person (21) ein Hinweissignal an einen Server (42) gesendet wird.

4. Verfahren (50) nach einem der vorherigen Ansprüche, wobei bei einem Identifizieren eines Rauchens einer Person (21) eine Bewegungstrajektorie der Person (21) und/oder Bilddarstellungen der Person (21) in einem nichtflüchtigen Speicher abgespeichert wird bzw. werden.

5. Verfahren (50) nach einem der vorherigen Ansprüche, wobei mittels des visuellen Sensors (24) ein Wärmebild und/oder eine Bewegungstrajektorie einer Person (21) aufgenommen wird.

6. Verfahren (50) nach Anspruch 5, wobei das visuelle Signal mittels einer Bildanalyse, insbesondere einer Segmentierung eines Wärmebildes nach Bereichen mit unterschiedlicher Temperatur mittels einer räumlichen Filterung, und einer Klassifikation der Merkmale, insbesondere mittels eines Nächste-Nachbar-Klassifikators oder eines Bayes'schen Klassifikators, ausgewertet wird.

7. Verfahren (50) nach einem der vorherigen Ansprüche, wobei mittels der zweiten Auswerteeinheit (28) mittels des akustischen Signals ein Rauchen einer Person (21) festgestellt wird, wenn das akustische Signal als ein Betätigen eines Feuerzeugs oder als ein Betätigen eines Streichholzes erkannt wird.

8. Verfahren (50) nach einem der vorherigen Ansprüche, wobei das akustische Signal mittels einer Merkmalsextraktion, insbesondere einer Fast Fourier Transformation, und einer Klassifikation der Merkmale ausgewertet wird.

9. Verfahren (50) nach einem der vorherigen Ansprüche, wobei das akustische Signal mittels eines Recurrent Neural Network ausgewertet wird und/oder wobei das visuelle Signal mittels eines Deep Neural Network ausgewertet wird.

10. Vorrichtung (20) zur Identifizierung eines Rauchens einer Person (21), insbesondere in einem Fahrzeug, wobei auf der Vorrichtung (20) ein Verfahren (50) nach einem der vorherigen Ansprüche ausführbar ist, wobei die Vorrichtung (20) einen akustischen Sensor (22) zum Aufnehmen eines akustischen Signals aufweist und wobei die Vorrichtung (20) einen visuellen Sensor (24) zum Aufnehmen eines visuellen Signals aufweist.

11. Vorrichtung (20) nach Anspruch 10, wobei die Vorrichtung (20) eine erste Auswerteeinheit (26) aufweist zur Auswertung des akustischen Signals und zur Feststellung eines Rauchens einer Person (21) mittels des akustischen Signals und wobei die Vorrichtung (20) eine zweite Auswerteeinheit (28) aufweist zur Auswertung des visuellen Signals und zur Feststellung eines Rauchens einer Person (21) mittels des visuellen Signals,
wobei ein Rauchen einer Person (21) identifiziert wird, wenn mittels der ersten Auswerteeinheit (26) mittels des akustischen Signals ein Rauchen einer Person (21) festgestellt wird und mittels der zweiten Auswerteeinheit (28) mittels des visuellen Signals ein Rauchen einer Person (21) festgestellt wird.

12. Vorrichtung (20) nach einem der vorherigen Ansprüche 10 bis 11, wobei der visuelle Sensor (24) als eine Kamera ausgebildet ist.

13. Vorrichtung (20) nach Anspruch 12, wobei die Kamera als eine Wärmebildkamera zum Aufnehmen eines Wärmebildes und/oder als eine Videokamera zum Aufnehmen einer Bewegungstrajektorie der Person (21) ausgebildet ist.

14. Vorrichtung (20) nach einem der vorherigen Ansprüche 10 bis 13, wobei der akustische Sensor (22) als zumindest ein Mikrofon ausgebildet ist.

15. Fahrzeug mit einer Vorrichtung (20) nach einem der vorherigen Ansprüche 10 bis 14.
